(19) Europäisches Patentamt / European Patent Office / Office européen des brevets

(11) **EP 3 827 342 B1**

(12) **FASCICULE DE BREVET EUROPEEN**

(45) Date de publication et mention
de la délivrance du brevet:
**21.09.2022 Bulletin 2022/38**

(21) Numéro de dépôt: **19766361.0**

(22) Date de dépôt: **24.07.2019**

(51) Classification Internationale des Brevets (IPC):
**G06F 9/52** *(2006.01)*     **G06F 9/54** *(2006.01)*

(52) Classification Coopérative des Brevets (CPC):
**G06F 9/54; G06F 9/52**

(86) Numéro de dépôt international:
**PCT/IB2019/056334**

(87) Numéro de publication internationale:
**WO 2020/021474 (30.01.2020 Gazette 2020/05)**

(54) **PROCÉDÉ DE CORRECTION DE DONNÉES ENTRE DEUX PROCESSUS PÉRIODIQUES ET SYSTÈME AUTOMATISÉ METTANT EN OEUVRE UN TEL PROCÉDÉ**

VERFAHREN ZUM KORRIGIEREN VON DATEN ZWISCHEN ZWEI PERIODISCHEN PROZESSEN UND AUTOMATISCHES SYSTEM ZUR DURCHFÜHRUNG DES VERFAHRENS

METHOD OF CORRECTING DATA BETWEEN TWO PERIODIC PROCESSES AND AUTOMATED SYSTEM CARRYING OUT SAID PROCESS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **26.07.2018 FR 1800818**

(43) Date de publication de la demande:
**02.06.2021 Bulletin 2021/22**

(73) Titulaire: **NEXTER Systems
78034 Versailles Cedex (FR)**

(72) Inventeur: **HOSLIN, Dominique
18023 Bourges (FR)**

(74) Mandataire: **Cabinet Chaillot
16/20, avenue de l'Agent Sarre
B.P. 74
92703 Colombes Cedex (FR)**

(56) Documents cités:
**EP-A1- 2 386 962     US-A1- 2016 041 855**

• **GERBER R ET AL: "GUARENTEEING REAL-TIME
REQUIREMENTS WITH RESOURCE-BASED
CALIBRATION OF PERIODIC PROCESSES", IEEE
TRANSACTIONS ON SOFTWARE ENGINEERING,
IEEE SERVICE CENTER, LOS ALAMITOS, CA, US,
vol. 21, no. 7, 1 juillet 1995 (1995-07-01), pages
579-592, XP000538980, ISSN: 0098-5589, DOI:
10.1109/32.392979**

EP 3 827 342 B1

Processed by Luminess, 75001 PARIS (FR)

**Description**

Le domaine technique de l'invention est celui des procédés permettant de corriger les données lors de communications entre différents processus.

Il est classique dans les systèmes automatisés de voir communiquer différents processus, l'un des processus (ou processus consommateur) utilisant une ou plusieurs données issues d'un autre processus (dit processus producteur). Généralement chaque processus est piloté par un processeur et engendre différentes données qui sont utilisées par différents organes du système.

Lorsque le même processeur pilote les deux processus, ces derniers sont synchronisés car ils utilisent la même horloge. Les données du processus producteur sont donc fournies au processus consommateur à la fréquence de travail de ce dernier. Les données sont donc toujours d'actualité et en phase entre les processus.

Lorsque les deux processus fonctionnent avec des processeurs distincts et qui utilisent des horloges n'ayant pas la même fréquence d'échantillonnage, il risque de se produire un décalage temporel entre les processus. Lorsque par ailleurs le processus consommateur est plus rapide que le processus producteur, les données dont dispose le processus consommateur vont se trouver périodiquement trop anciennes et pourront conduire à une imprécision des résultats obtenus par le processus consommateur.

A titre d'exemple, si on considère un dispositif d'entraînement au tir qui associe une tourelle dotée de son électronique de contrôle et d'asservissement et un logiciel de simulation animant un monde virtuel dans lequel doit opérer la tourelle, l'électronique de commande de la tourelle va se trouver pilotée par les ordres issus du logiciel de simulation. En particulier l'opérateur va désigner des cibles dans le monde virtuel et la tourelle va devoir pointer sur ces cibles éventuellement animées.

Or les logiciels de simulation fonctionnent de façon périodique, le plus souvent avec une fréquence qui n'excède pas celle de rafraîchissement des écrans (60Hz) alors que les calculateurs de conduite de tir et de commande de pointage de tourelle fonctionnent avec une fréquence de l'ordre de 100 Hz.

L'asservissement de la conduite de tir va donc devoir se faire sur la base de données de cibles simulées qui lui parviendront avec une fréquence plus faible, donc avec des déphasages (c'est à dire les écarts temporels entre les instants de production et de consommation d'une donnée) variant entre 0 et une période du processus producteur. Ces déphasages sont assimilables à du bruit de mesure, et engendrent des erreurs sur les pointages obtenus.

La publication intitulée « Guarenteeing real-time requirements with resource-based calibration of periodic processes », de Gerber R et al (IEEE Transactions on Software Engineering, vol. 21, no. 7, 01/07/1995, pages 579-592) mentionne des problèmes d'exactitude des données échangées entre des processus périodiques au sein d'un système temps-réel, et propose un procédé de correction de données entre des processus producteurs et consommateurs qui consiste à adopter une horloge commune pour l'ensemble des tâches producteurs-consommateurs. Cependant, cette solution n'est pas applicable dans le cas où les processus producteurs et consommateurs ont pour contrainte de s'éxécuter dans un système sans horloge commune.

C'est le but de l'invention que de proposer un procédé permettant de corriger les données issues du processus producteur pour permettre au processus consommateur de fonctionner de façon plus fiable, les processus étant incorporés dans un système sans horloge commune. Ledit procédé permet donc de diminuer le bruit de mesure des données consommées par le processus consommateur.

Ainsi l'invention a pour objet un procédé de correction de données entre un premier processus périodique, dit processus producteur, associé à un premier calculateur, et un second processus périodique dit processus consommateur, associé à un deuxième calculateur, les processus étant incorporés dans un système automatisé sans horloge commune, le processus consommateur utilisant au moins une donnée fournie par le processus producteur pour élaborer au moins une information d'état du système, et la période du processus producteur étant supérieure à la période du processus consommateur, procédé caractérisé en ce qu'on utilise au moins deux données successives issues du processus producteur pour élaborer par extrapolation sur au moins un horizon d'extrapolation une donnée corrigée qui est utilisée par le processus consommateur à la place de la donnée la plus récente reçue du processus producteur.

La donnée corrigée utilisée par le processus consommateur pourra être élaborée en appliquant une formule d'extrapolation d'ordre n au moins égal à 1, formule combinant les n+1 dernières données du processus producteur et au moins un horizon d'extrapolation défini comme une moyenne des écarts en temps qui interviennent entre la production des données par le processus producteur et la consommation desdites données par le processus consommateur pour le type de données considéré et sur une période globale.

On pourra en particulier définir au moins deux horizons d'extrapolation différents, un premier horizon d'extrapolation associé aux données reçues pour la première fois par le processus consommateur et un deuxième horizon d'extrapolation associé aux données n'ayant pas été rafraîchies depuis la période précédente du processus consommateur.

Selon un mode particulier de réalisation, la période du processus producteur et la période du processus consommateur sont commensurables ou peuvent être rendues commensurables avec une échelle de mesure donnée.

Selon un autre mode de réalisation, la période du processus producteur et la période du processus consommateur ne sont pas commensurables mais sont remplacées dans le calcul des données corrigées et des horizons d'extrapolation par des approximations numériques desdites périodes, approximations réalisées par arrondissement à $10^{-n}$ près d'une unité de temps commune, les approximations pouvant ainsi être rendues entières et commensurables avec une échelle de mesure donnée.

Avantageusement la période globale pourra être définie comme le PPCM des périodes du processus producteur et du processus consommateur ou de leurs approximations entières, exprimées en nombre entier d'une échelle de mesure.

La formule d'extrapolation pourra être du type développement limité.

Selon un mode particulier de réalisation, le développement limité est du 1$^{er}$ ordre, soit $D_{cor} = D_i + H (D_i - D_{i-1})/T_A$. Selon un autre mode de réalisation, le développement limité est du 2$^{nd}$ ordre, soit $D_{cor} = D_i + (H_j/T_A)[3(D_i - D_{i-1}) - (D_{i-1} - D_{i-2})]/2 + (H_j/T_A)^2[(D_i - D_{i-1}) - (D_{i-1} - D_{i-2})]/2$.

L'invention a également pour objet un système automatisé mettant en œuvre un tel procédé, système caractérisé en ce qu'il est constitué par un dispositif d'entraînement au tir associant d'une part une tourelle canon et un calculateur de pointage tourelle, et d'autre part un calculateur de simulation d'un environnement virtuel, le calculateur de pointage mettant en œuvre le processus consommateur pour élaborer un pointage de la tourelle et le calculateur de simulation mettant en œuvre le processus producteur pour élaborer une image virtuelle dans laquelle le pointage de l'arme commandé par un utilisateur est incorporé, le calculateur de pointage utilisant les données issues du calculateur de simulation pour commander le pointage de la tourelle en fonction des informations de localisation de cible fournies par le calculateur de simulation. L'invention sera mieux comprise à la lecture de la description qui va suivre d'un exemple de réalisation, description faite en référence aux dessins annexés et dans lesquels :

[Fig. 1] : schéma d'un système automatisé selon un exemple de réalisation de l'invention ;
[Fig. 2] : chronogramme représentant en parallèle la conduite de deux processus périodiques ayant des périodes différentes ;
[Fig. 3a] : chronogramme permettant de visualiser les différents écarts observés entre les données ;
[Fig. 3b] : chronogramme permettant de visualiser les différents écarts observés entre les données ;
[Fig. 3c] : chronogramme permettant de visualiser les différents écarts observés entre les données ;
[Fig. 3d] : chronogramme permettant de visualiser les différents écarts observés entre les données ;
[Fig. 4] : logigramme schématisant les principales étapes du procédé selon l'invention.

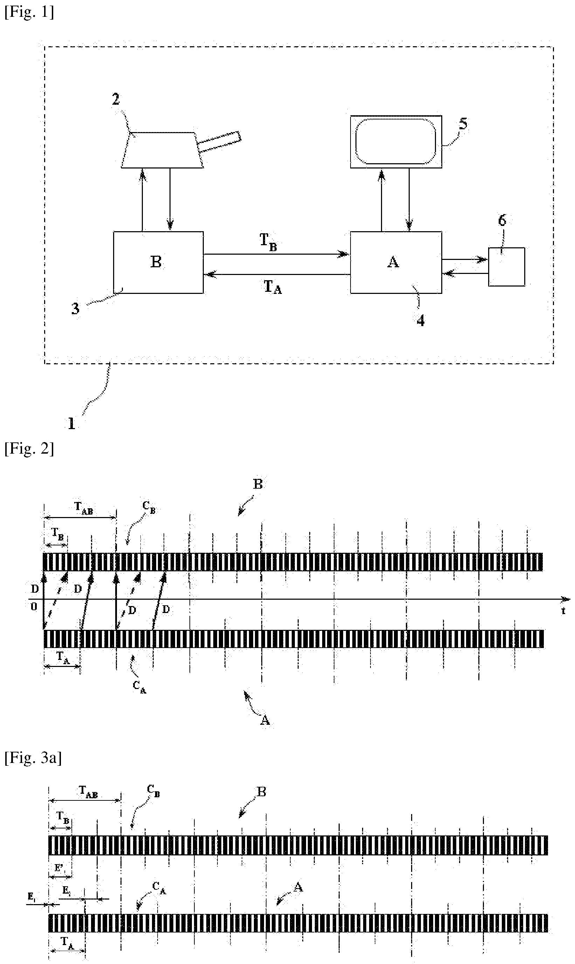

En se reportant à la figure 1, un système automatisé 1 selon un mode de réalisation de l'invention, est constitué par un dispositif d'entraînement au tir 1 associant, d'une part une tourelle canon 2 et un deuxième calculateur 3 (ou calculateur de pointage tourelle), et d'autre part un premier calculateur 4 (ou calculateur de simulation d'un environnement virtuel) qui est relié à un écran de visualisation 5.

Pour des raisons de réalisme de la simulation, le calculateur 3 de pointage ainsi que les motorisations de la tourelle sont identiques aux équipements présents dans un véhicule réel. Le calculateur 3 a un fonctionnement périodique cadencé à une fréquence de 100 Hz (soit une période $T_B$ de rafraîchissement des signaux qui est égale à 10 millisecondes).

Ce calculateur 3 met en œuvre un processus B, dit consommateur, qui élabore le pointage de la tourelle 2 à partir des informations fournies par le calculateur de simulation 4 sur lequel agit l'opérateur utilisant le simulateur 1.

Le calculateur de simulation 4 génère sur l'écran 5 une image d'un environnement virtuel dans lequel évolue le véhicule équipé de la tourelle 2. Cet environnement inclut des cibles dont le calculateur de simulation 4 peut élaborer les coordonnées et l'opérateur qui souhaite traiter les cibles va interagir avec le calculateur de simulation 4 par le biais d'une interface homme / machine 6, afin de commander la tourelle 2 pour assurer un pointage en direction de la cible et éventuellement permettre une poursuite automatique de la cible si cette dernière est mobile.

Les coordonnées de pointage sont donc périodiquement élaborées et rafraîchies par un processus A, dit processus producteur, qui est piloté par le premier calculateur 4, ou calculateur de simulation 4. Ces données D sont fournies au processus consommateur B qui est conduit par le deuxième calculateur 3, ou calculateur de pointage 3.

Ainsi, le processus producteur A permet d'élaborer une image virtuelle dans laquelle le pointage de l'arme commandé par un utilisateur est incorporé, et le calculateur de pointage 3 utilise les données D issues du calculateur de simulation 4 pour commander le pointage de la tourelle 2 en fonction des informations de localisation de cible fournies par le calculateur de simulation 4.

Le calculateur de simulation 4 a une fréquence de fonctionnement de son processus producteur A qui est de 60 Hz. Cette fréquence est en effet celle de la plupart des afficheurs numériques et il est inutile d'adopter une fréquence supérieure qui ne permettrait pas de rafraîchir l'affichage sur l'écran 5. La période $T_A$ de rafraîchissement des données D fournies par le processus producteur A est donc égale à 16,67 millisecondes (période arrondie au centième de milliseconde le plus proche).

Dans la suite de la description, pour la simplicité des représentations graphiques, on considèrera un processus producteur A ayant une période $T_A$ égale à 12 millisecondes et un processus consommateur B ayant une période $T_B$ égale à 8 millisecondes.

La figure 2 montre ainsi sur un chronogramme et de façon schématique la succession le long de l'échelle des temps (t) des processus producteur A et consommateur B. Les processus sont représentés sous forme de réglettes divisées en unités de temps, ici une milliseconde entre chaque graduation. On retrouve sur chaque réglette des blocs, séparés par des lignes pointillées, et correspondant à un cycle ($C_A$ ou $C_B$) du processus considéré. Chaque bloc a une longueur proportionnelle à la période $T_A$ ou $T_B$ du processus en question.

D'une façon simplifiée le processus consommateur B utilise pour fonctionner les dernières données D reçues du processus producteur A. Du fait de la différence de période des deux processus, le processus consommateur B est donc périodiquement obligé d'utiliser pour au moins deux cycles successifs $C_B$ (deux périodes successives $T_B$) les mêmes valeurs de données D issues du processus producteur A.

Il en résulte un bruit de mesure pouvant nuire au pointage de la tourelle.

On notera qu'à l'inverse, le processus producteur A peut utiliser sans difficultés des données fournies par le processus consommateur B. La période de fonctionnement $T_B$ du processus consommateur est inférieure à celle $T_A$ du processus producteur. Le processus producteur A a donc toujours des données récentes.

Pour comprendre l'invention, il importe peu de déterminer à quel instant précis de chaque cycle producteur $C_A$ la donnée D est fournie, ni d'ailleurs de savoir à quel instant du cycle consommateur $C_B$ cette donnée est utilisée. Il suffit de considérer que, lorsqu'un cycle consommateur $C_B$ démarre, il n'a à sa disposition que la dernière donnée issue du cycle producteur $C_A$ en cours.

Conformément à l'invention, on va remplacer au niveau du processus consommateur B, la donnée D la plus récente reçue par une donnée corrigée $D_{cor}$.

Cette donnée $D_{cor}$ sera obtenue par extrapolation sur au moins un horizon $H_j$ à partir d'au moins deux données successives ($D_{i-1}$ et $D_i$) issues du processus producteur A. Une extrapolation de premier ordre n'utilisera que deux données successives. Une extrapolation d'ordre n (au moins égal à 1) combinera les n+1 dernières données du processus producteur A.

Les horizons d'extrapolation $H_j$ sont obtenus par calcul des écarts temporels moyens entre la production d'une donnée par le processus producteur A et sa consommation par le processus consommateur B au cours d'une période globale $T_{AB}$. On distinguera des horizons $H_j$ différents en fonction de l'ancienneté de la donnée considérée.

Si la donnée reçue est déphasée (c'est-à-dire datée) de moins d'une période $T_B$ on choisira un premier horizon $H_i$.

Si la donnée reçue est datée de plus d'une période $T_B$ et de moins de deux périodes $T_B$, on choisira un horizon $H_2$.

Si la donnée reçue est datée de plus de deux périodes $T_B$ et de moins de 3 périodes $T_B$, on choisira un horizon $H_3$, et ainsi de suite.

On écrira

$$D_{cor} = F_{extra} (H_j, D_i, D_{i-1} \dots D_{i-n})$$

D'une façon plus précise, lorsque les périodes sont commensurables, c'est-à-dire multiples entiers d'une même grandeur (définition qui est à retenir pour l'ensemble de la présente description), la période globale $T_{AB}$ est définie comme le PPCM (plus petit multiple commun) des périodes $T_A$ du processus producteur et $T_B$ du processus consommateur.

On met en œuvre en effet ici des processus dont les périodes sont commensurables avec une échelle de mesure donnée (qu'il s'agisse de secondes, millisecondes, microsecondes, nanosecondes ou autres...). Ce qui veut dire que, avec l'échelle de mesure choisie, la période de chaque processus est un nombre entier.

Dans l'exemple représenté, le processus producteur A a une période $T_A$ = 12 millisecondes et le processus consommateur B a une période $T_B$ = 8 millisecondes.

Le plus petit commun multiple de 12 et de 8 est 24. La période globale des deux processus est donc $T_{AB}$ = 24 ms. En d'autres termes quand le processus producteur A a accompli deux cycles, le processus consommateur a accompli trois cycles ($2T_A = 3T_B$).

Ceci signifie que les écarts en temps $E_i$ possibles entre les deux processus sont en nombre fini et se répètent dans le temps avec la période globale $T_{AB}$. Ces écarts étant en nombre fini, il est possible de tous les calculer et de connaître leur valeur moyenne sur la période globale $T_{AB}$, cette valeur moyenne constituera l'horizon d'extrapolation $H_j$.

A titre d'exemple on a représenté aux figures 3a à 3d, des chronogrammes d'une succession des processus A et B mis en concordance l'un au-dessus de l'autre. Là encore chaque chronogramme est représenté sous la forme d'une réglette, graduée en unités de temps, ici une milliseconde entre chaque graduation.

On retrouve ainsi la période $T_A$ de 12 millisecondes pour le processus producteur A et la période $T_B$ de 8 millisecondes pour le processus consommateur B. La figure 3a montre ces réglettes avec une concordance entre le début de la première période $T_A$ et celui de la première période $T_B$.

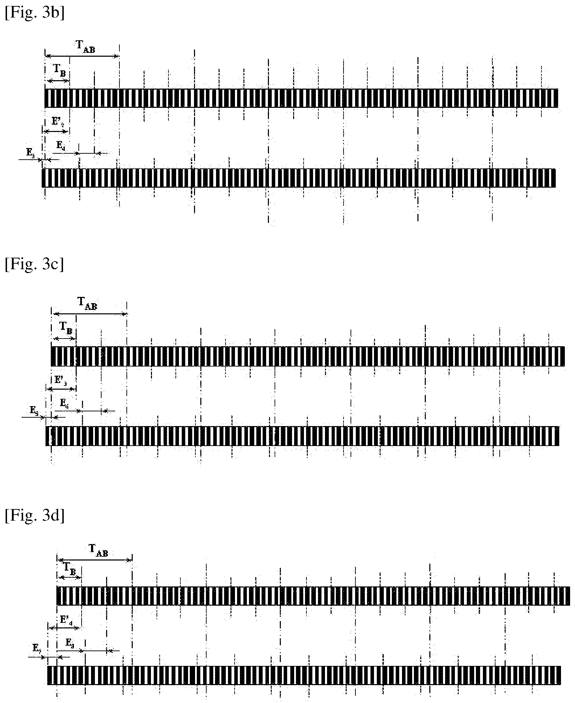

La figure 3b montre les réglettes avec le processus producteur A qui a sa première période $T_A$ qui démarre une milliseconde avant la première période $T_B$ du processus consommateur B.

La figure 3c montre les réglettes avec le processus producteur A qui a sa première période $T_A$ qui démarre deux millisecondes avant la première période $T_B$ du processus consommateur B.

La figure 3d montre les réglettes avec le processus producteur A qui a sa première période $T_A$ qui démarre trois millisecondes avant la première période $T_B$ du processus consommateur B.

On notera qu'avec un écart de quatre millisecondes les deux processus se retrouvent à nouveau avec une concordance relative analogue à celle de la figure 3a. La deuxième période $T_A$ du processus producteur démarre alors en même temps que la deuxième période $T_B$ du processus consommateur. Ces quatre figures montrent donc tous les écarts possibles entre le processus producteur A et le processus consommateur B.

Bien entendu cette présentation est volontairement simplifiée et considère que les données sont produites au début des périodes du processus émetteur A et qu'elles sont acquises au début des périodes du processus consommateur B. Ceci est sans importance en pratique puisque ce qui compte ce sont les écarts induits par la différence de période des deux processus. On a également négligé les temps de transfert des données d'un processus à l'autre.

On a représenté sur chaque figure les différents écarts observés. On a noté par $E_i$ les écarts (dits écarts primaires) entre la production d'une donnée D par le processus producteur A et sa première consommation par le processus récepteur B. Tous les écarts primaires ont une durée inférieure à $T_B$.

On a noté par $E'_i$ les écarts (dits écarts secondaires) entre production d'une donnée D par le processus producteur A et sa seconde consommation par le processus récepteur B. Tous les écarts secondaires ont une durée supérieure ou égale à $T_B$ et inférieure à $2T_B$.

Le processus récepteur B n'ayant pas reçu de nouvelle donnée du processus producteur A utilise en effet la dernière donnée qu'il a reçu de ce dernier et qui a donc un retard $E'_i$ par rapport à sa production qui était intervenue lors de la période $T_B$ précédente.

Si on considère les différentes configurations relatives possibles pour les deux processus sur cet exemple de réalisation, on a donc au cours d'une même période globale $T_{AB}$ : Huit écarts primaires différents : $E_1=0$, $E_2=4ms$, $E_3=1ms$, $E_4=5ms$, $E_5=2ms$, $E_6=6ms$, $E_7=3ms$ et $E_8=7ms$ ; Quatre écarts secondaires différents : $E'_1=8ms$, $E'_2=9ms$, $E'_3=10ms$ et $E'_4=11ms$.

Ainsi un premier horizon d'extrapolation $H_1$ est constitué par la moyenne des écarts primaires possibles entre le processus producteur A et le processus consommateur B pour la période globale $T_{AB}$. Ce premier horizon d'extrapolation est égal à 3,5 millisecondes. $H_1=(E_1+E_2+E_3+E_4+E_5+E_6+E_7+E_8)/8$. Parallèlement on pourra considérer un deuxième horizon d'extrapolation $H_2$ qui est la moyenne des écarts secondaires possibles entre le processus producteur A et le processus consommateur B pour la période globale $T_{AB}$. Ce deuxième horizon d'extrapolation est égal à 9,5 millisecondes. $H_2=(E'_1+E'_2+E'_3+E'_4)/4$.

Conformément à l'invention on va donc appliquer aux données $D_i$ fournies par le processus producteur A une formule d'extrapolation qui tiendra compte, à la fois d'au moins deux valeurs successives de ladite donnée ($D_i$ et $D_{i-1}$), et de l'horizon d'extrapolation $H_1$ ou $H_2$ associé au type de données considéré : Est-ce une donnée dite primaire, c'est-à-dire reçue pour la première fois ? Dans l'affirmative le procédé appliquera le premier horizon d'extrapolation $H_1$. ou bien : Est-ce une donnée, dite secondaire, c'est-à-dire qui n'a pas été rafraîchie depuis la dernière période $T_B$ ? Dans l'affirmative le procédé appliquera le deuxième horizon d'extrapolation $H_2$.

La formule d'extrapolation pourra être du type développement limité, telle que $D_{cor}=D_1+ H. (B_1-B_{i-1})/T_A$ pour une extrapolation d'ordre 1.

Il serait bien entendu possible de définir un seul horizon d'extrapolation mais la correction des données reçues correspondrait à une moins bonne réduction du bruit de mesure.

Il est préférable pour améliorer la précision de la correction de distinguer entre les types de données : reçue pour la première fois (donnée primaire) ou bien déjà reçue au cours d'un intervalle de temps supérieur à la période $T_B$ (donnée secondaire).

En effet les écarts moyens ont des valeurs très différentes dans l'un ou l'autre cas (inférieurs à $T_B$ pour les écarts moyens des données primaires et supérieurs à $T_B$ pour les écarts moyens des données secondaires).

L'invention a été décrite en référence à un exemple simple dans lequel l'écart entre les périodes entre $T_A$ et $T_B$ est modéré ($T_A-T_B=0,5.T_B$).

Il est bien entendu possible de la mettre en œuvre pour corriger les données lorsque les écarts des valeurs de périodes entre $T_A$ et $T_B$ sont plus importants, par exemple lorsque $T_A-T_B > 2 T_B$.

Dans ces cas, il pourra y avoir des écarts dits tertiaires ou d'une façon générale d'ordre n, lorsque les données fournies par le processus producteur A sont utilisées par le processus consommateur B trois fois ou n fois.

On définira alors d'autres horizons d'extrapolation $H_j$ toujours par le calcul des moyennes des écarts en temps d'ordre n possibles entre le processus producteur A et le processus consommateur B pour la période globale $T_{AB}$.

Par ailleurs la formule d'extrapolation d'ordre 1 décrite précédemment pourrait être remplacée par une formule d'extrapolation d'ordre supérieur utilisant plus de deux valeurs successives de la donnée $D_i$. Par exemple une formule d'extrapolation parabolique (ordre 2) telle que :

$$D_{cor} = D_i + (H_j/T_A)[3(D_i - D_{i-1}) - (D_{i-1} - D_{i-2})]/2 + (H_j/T_A)^2[(D_i - D_{i-1}) - (D_{i-1} - D_{i-2})]/2$$

Les principes décrits précédemment sont appliqués de la même façon avec un processus producteur A ayant une période $T_A$ de 16,67 millisecondes (soit la période correspondant à une fréquence de 60Hz, arrondie au centième de milliseconde) et un processus consommateur B ayant une période $T_B$ de 10 ms (100Hz).

Avec ces deux processus périodiques, $3.T_A = 5.T_B$ et la succession des écarts évolue donc encore périodiquement avec une période de 50 millisecondes. Le nombre des écarts possibles est là encore fini au cours de la période globale $T_{AB}$ = 50ms et il est possible de calculer les moyennes des écarts primaires et secondaires

La valeur $D_{cor}$ ainsi calculée est utilisée par le processus consommateur B à la place de la donnée la plus récente Di reçue du processus producteur A.

L'invention a été décrite dans une application dans laquelle les processus producteur et consommateur ont des périodes commensurables avec une unité de temps donnée.

Il est possible également de mettre en œuvre l'invention avec des périodes qui ne sont pas commensurables.

Dans ce cas on applique toujours une formule d'extrapolation d'ordre n au moins égal à 1, formule combinant les n+1 dernières données du processus producteur et au moins un horizon d'extrapolation défini comme une moyenne des écarts en temps qui interviennent entre la production des données par le processus producteur et la consommation desdites données par le processus consommateur pour le type de données considéré et sur une période globale.

Pour appliquer cette formule on va réaliser tout d'abord une approximation numérique entière des périodes $T_A$ et $T_B$ des processus producteur ($T_A$) et consommateur ($T_B$). On pourra noter $T_A^n$ et $T_B^n$ les approximations numériques entières de $T_A$ et $T_B$ obtenues après que $T_A$ et $T_B$ aient été arrondis à $10^{-n}$ près d'une unité de temps commune - ou échelle de mesure (secondes, millisecondes, microsecondes, nanosecondes ou autres...). Cette approximation conduit à considérer des périodes $T_A^n$ et $T_B^n$ qui deviennent entières et donc commensurables.

Il est donc possible d'appliquer le procédé décrit précédemment et de calculer le PPCM des périodes $T_A^n$ et $T_B^n$ qui correspond à la période globale $T_{AB}$ sur laquelle on calculera les écarts en temps $E_i$ possibles entre les deux processus.

Comme dans le mode de réalisation précédent on définira des horizons de mesure $H_j$ différents en fonction de l'ancienneté de la donnée considérée.

Si la donnée reçue est datée de moins d'une période $T_B^n$ on choisira un premier horizon $H_1$, si la donnée reçue est datée de plus d'une période $T_B^n$ et de moins de deux période $T_B^n$, on choisira un horizon $H_2$, si la donnée reçue est datée de plus de deux périodes $T_B^n$ et de moins de 3 périodes $T_B^n$, on choisira un horizon $H_3$, et ainsi de suite.

Chaque horizon $H_j$ pourra être calculé sur une ou plusieurs périodes globales au cours d'une phase préalable d'apprentissage puis mémorisé pour être utilisé ensuite dans les formules d'extrapolations.

Les performances du procédé selon l'invention dépendront de la précision de l'approximation choisie. Pour une approximation d'ordre n, donc lorsque les périodes $T_A$ et $T_B$ des processus producteur A et consommateur B sont remplacées dans l'évaluation de la correction à apporter par des périodes $T_A^n$ et $T_B^n$, valeurs entières obtenues après que $T_A$ et $T_B$ aient été arrondis à $10^{-n}$ près d'une unité de temps commune, on pourra donc évaluer des horizons d'extrapolation d'ordre n notés $H_j^n$.

Plus la valeur de n est importante, plus la précision apportée à la définition des horizons est également importante, et plus la correction des données est précise. A titre d'exemple, si on considère un processus producteur $T_A = \pi$ secondes et un processus consommateur $T_B$ = 1 seconde. Un premier niveau d'approximation consistera à remplacer, pour le calcul de la correction, $T_A$ et $T_B$ par $T_A^1$ et $T_B^1$ avec $T_A^1$ = 3 secondes et $T_B^n$ = 1 seconde. Les horizons d'extrapolation pour ce premier niveau d'extrapolation seront alors notés $H_1^1$, $H_2^1$, $H_3^1$ et seront évalués pour une période globale $T_{AB}$ = 3 secondes (horizons exprimés en seconde).

Un deuxième niveau d'approximation consistera à remplacer, pour le calcul de la correction, $T_A$ et $T_B$ par $T_A^2$ et $T_B^2$ avec $T_A^2$ = 31 dixièmes de seconde et $T_B^2$ = 10 dixièmes de seconde. Les horizons d'extrapolation pour ce deuxième niveau d'extrapolation seront alors notés $H_1^2$, $H_2^2$, $H_3^2$ et seront évalués pour une période globale $T_{AB}$ = 310 dixièmes de seconde (horizons exprimés en dixièmes de seconde). Nota 310 est le PPCM de 31 et de 10.

Un troisième niveau d'approximation consistera à remplacer, pour le calcul de la correction, $T_A$ et $T_B$ par $T_A^3$ et $T_B^3$ avec $T_A^3$ = 314 centièmes de seconde et $T_B^3$ = 100 centièmes de seconde. Les horizons d'extrapolation pour ce troisième niveau d'extrapolation seront alors notés $H_1^3$, $H_2^3$, $H_3^3$ et seront évalués pour une période globale $T_{AB}$ = 15700 centièmes de seconde (horizons exprimés en centièmes de seconde). Nota 15700 est le PPCM de 314 et de 100.

Bien entendu le choix de la précision souhaitée pour la correction sera effectué par l'Homme du Métier après différentes simulations adaptées aux processus à mettre en œuvre. L'Homme du Métier prendra notamment en compte les précisions avec lesquelles sont connues les périodes $T_A$ et $T_B$.

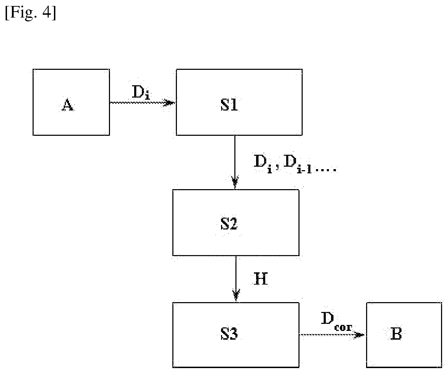

La figure 4 schématise les différentes étapes du procédé selon l'invention.

Au cours d'une première étape S1 d'un cycle $C_B$ du processus consommateur B, ce processus identifie la dernière donnée $D_i$ reçue du processus producteur A et mesure son ancienneté exprimée en périodes du processus B. Les données $D_i$ sont parallèlement mises en mémoire par le processus B, au fur et à mesure de leur réception, et marquées par les numéros respectifs du cycle $C_B$ du processus consommateur B au cours desquels elles sont parvenues au processus B.

Au cours de la deuxième étape S2, cette donnée reçue $D_i$ est associée à son horizon H d'extrapolation qui est choisi selon le retard entre le cycle courant du processus B et le cycle au cours duquel $D_i$ est parvenue au processus B.

Au cours de la troisième étape S3 on calcule une donnée corrigée $D_{cor}$ par la formule d'extrapolation $F_{extra}$ visée précédemment.

Cette donnée corrigée $D_{cor}$ est utilisée par le processus consommateur B en lieu et place de la dernière donnée $D_i$ reçue du processus producteur A.

Les différentes étapes du procédé selon l'invention seront incorporées avantageusement sous forme de code logiciel en entrée du calculateur de pointage 3, en amont du processus consommateur B.

Grâce à l'invention il y a ainsi une « anticipation » des commandes transmises par le processus producteur A et un signal de commande moins bruité entre les deux processus A et B.

On a pu ainsi vérifier que, pour le pilotage des moteurs de commande de pointage en gisement et en site de la tourelle 2, les écarts entre la consigne de pointage (ligne de visée) et le pointage effectif se trouvaient réduits dans les proportions suivantes :

Ecart maximum : réduit de 2/3
Ecart moyen : réduit de 1/3.

Ces performances assurent une conduite de la simulation plus conforme à la réalité en matière de pointage.

L'invention a été décrite ici dans son application à un système automatisé de type dispositif d'entraînement au tir.

Il est clair qu'il est possible d'appliquer l'invention pour corriger les données entre deux processus périodiques fonctionnant sans base de temps commune.

Il en résultera les mêmes avantages en termes de réduction de bruit de mesure pour le processus consommateur.

On pourra par exemple appliquer le procédé selon l'invention à un système associant plusieurs systèmes de simulation distribués (« fédération de simulations ») où chaque simulation fonctionne selon sa période propre générée localement et échange des données avec les autres systèmes.

## Revendications

1. Procédé de correction de données entre un premier processus périodique, dit processus producteur (A), associé à un premier calculateur (4), et un second processus périodique dit processus consommateur (B), associé à un deuxième calculateur (3), les processus étant incorporés dans un système automatisé (1) sans horloge commune, le processus consommateur (B) utilisant au moins une donnée fournie par le processus producteur (A) pour élaborer au moins une information d'état du système (1), et la période ($T_A$) du processus producteur (A) étant supérieure à la période ($T_B$) du processus consommateur (B), procédé **caractérisé en ce qu'**on utilise au moins deux données successives (D) issues du processus producteur (A) pour élaborer par extrapolation sur au moins un horizon d'extrapolation une donnée corrigée ($D_{cor}$) qui est utilisée par le processus consommateur (B) à la place de la donnée la plus récente reçue du processus producteur (A).

2. Procédé de correction de données selon la revendication 1, **caractérisé en ce que** la donnée corrigée ($D_{cor}$) utilisée par le processus consommateur (B) est élaborée en appliquant une formule d'extrapolation d'ordre n au moins égal à 1, formule combinant les n+1 dernières données ($D_i$) du processus producteur (A) et au moins un horizon d'extrapolation ($H_j$) défini comme une moyenne des écarts en temps qui interviennent entre la production des données par le processus producteur (A) et la consommation desdites données par le processus consommateur (B) pour le type de données considéré et sur une période globale (TAB).

3. Procédé de correction de données selon la revendication 2, **caractérisé en ce qu'**on définit au moins deux horizons d'extrapolation différents, un premier horizon d'extrapolation ($H_1$) associé aux données reçues pour la première fois par le processus consommateur (B) et un deuxième horizon d'extrapolation ($H_2$) associé aux données n'ayant pas été rafraîchies depuis la période précédente du processus consommateur (B).

4. Procédé de correction de données selon une des revendications 2 ou 3, **caractérisé en ce que** la période ($T_A$) du processus producteur (A) et la période ($T_B$) du processus consommateur (B) sont commensurables ou peuvent être rendues commensurables avec une échelle de mesure donnée.

5. Procédé de correction de données selon une des revendications 2 ou 3, **caractérisé en ce que** la période ($T_A$) du processus producteur (A) et la période ($T_B$) du processus consommateur (B) ne sont pas commensurables mais sont remplacées dans le calcul des données corrigées et des horizons d'extrapolation ($H_j$) par des approximations numériques ($T_A{}^n, T_B{}^n$) desdites périodes, approximations réalisées par arrondissement à $10^{-n}$ près d'une unité de temps commune, les approximations pouvant ainsi être rendues entières et commensurables avec une échelle de mesure donnée.

6. Procédé de correction de données selon une des revendications 4 ou 5, **caractérisé en ce que** la période globale ($T_{AB}$) est définie comme le PPCM des périodes ($T_A, T_B$) du processus producteur (A) et du processus consommateur (B) ou de leurs approximations entières ($T_A{}^n, T_B{}^n$), exprimées en nombre entier d'une échelle de mesure.

7. Procédé de correction de données selon une des revendications 2 à 6, **caractérisé en ce que** la formule d'extrapolation est du type développement limité.

8. Procédé de correction de données selon la revendication 7, **caractérisé en ce que** le développement limité est du $1^{er}$ ordre, soit $D_{cor} = D_i + H (D_i - D_{i-1})/T_A$.

9. Procédé de correction de données selon la revendication 7, **caractérisé en ce que** le développement limité est du $2^{nd}$ ordre, soit $D_{cor} = D_i + (H_j/T_A)[3(D_i-D_{i-1})-(D_{i-1}-D_{i-2})]/2 + (H_j/T_A)^2[(D_i-D_{i-1})-(D_{i-1}-D_{i-2})]/2$.

10. Système automatisé (1) mettant en œuvre le procédé selon une des revendications précédentes, système **caractérisé en ce qu'**il est constitué par un dispositif d'entraînement au tir associant d'une part une tourelle canon (2) et un calculateur (3) de pointage tourelle, et d'autre part un calculateur (4) de simulation d'un environnement virtuel, le calculateur de pointage (3) mettant en œuvre le processus consommateur (B) pour élaborer un pointage de la tourelle (2) et le calculateur de simulation (4) mettant en œuvre le processus producteur (A) pour élaborer une image virtuelle dans laquelle le pointage de l'arme commandé par un utilisateur est incorporé, le calculateur de pointage (3) utilisant les données issues du calculateur de simulation (4) pour commander le pointage de la tourelle (2) en fonction des informations de localisation de cible fournies par le calculateur de simulation (4).

**Patentansprüche**

1. - Verfahren zum Korrigieren von Daten zwischen einem ersten periodischen Prozess, bezeichnet als erzeugender Prozess (A), der einem ersten Rechner (4) zugeordnet ist, und einem zweiten periodischen Prozess, bezeichnet als konsumierender Prozess (B), der einem zweiten Rechner (3) zugeordnet ist, wobei die Prozesse in ein automatisiertes System (1) ohne gemeinsamen Zeitmesser inkorporiert sind, wobei der konsumierende Prozess (B) mindestens einen von dem erzeugenden Prozess (A) bereitgestellten Datenwert verwendet, um mindestens eine Zustandsinformation des Systems (1) zu erarbeiten, und der Zeitraum ($T_A$) des erzeugenden Prozesses (A) größer als der Zeitraum ($T_B$) des konsumierenden Prozesses (B) ist, wobei das Verfahren **dadurch gekennzeichnet ist, dass** mindestens zwei aufeinanderfolgende Datenwerte (D) aus dem erzeugenden Prozess (A) verwendet werden, um durch Extrapolation auf mindestens einem Extrapolationshorizont einen korrigierten Datenwert ($D_{cor}$) zu erarbeiten, der vom konsumierenden Prozess (B) anstelle des neuesten, vom erzeugenden Prozess (A) erhaltenen Datenwert verwendet wird.

2. - Verfahren zum Korrigieren von Daten nach Anspruch 1, **dadurch gekennzeichnet, dass** der korrigierte, vom konsumierenden Prozess (B) verwendete Datenwert ($D_{cor}$) durch Anwendung einer Extrapolationsformel in der Größenordnung von n mindestens gleich 1 erarbeitet wird, wobei die Formel die n+1 letzten Datenwerte ($D_i$) des erzeugenden Prozesses (A) und mindestens einen Extrapolationshorizont ($H_j$) kombiniert, der als Mittelwert der zeitlichen Abweichungen definiert ist, die zwischen der Erzeugung der Datenwerte durch den erzeugenden Prozess (A) und dem Konsum der Datenwerte durch den konsumierenden Prozess (B) für den berücksichtigten Datenwerttyp und über einen globalen Zeitraum ($T_{AB}$) liegen.

**3.** - Verfahren zum Korrigieren von Daten nach Anspruch 2, **dadurch gekennzeichnet, dass** mindestens zwei unterschiedliche Extrapolationshorizonte definiert werden, ein erster Extrapolationshorizont ($H_1$), der den erstmalig vom konsumierenden Prozess (B) erhaltenen Datenwerten zugeordnet ist, und ein zweiter Extrapolationshorizont ($H_2$), der den Datenwerten zugeordnet ist, die seit dem vorangegangenen Zeitraum des konsumierenden Prozesses (B) nicht aufgefrischt wurden.

**4.** - Verfahren zum Korrigieren von Daten nach einem der Ansprüche 2 oder 3, **dadurch gekennzeichnet, dass** der Zeitraum ($T_A$) des erzeugenden Prozesses (A) und der Zeitraum ($T_B$) des konsumierenden Prozesses (B) kommensurabel sind oder mit einer gegebenen Messskala kommensurabel gestaltet werden können.

**5.** - Verfahren zum Korrigieren von Daten nach einem der Ansprüche 2 oder 3, **dadurch gekennzeichnet, dass** der Zeitraum ($T_A$) des erzeugenden Prozesses (A) und der Zeitraum ($T_B$) des konsumierenden Prozesses (B) nicht kommensurabel sind, sondern in der Berechnung der korrigierten Datenwerte und der Extrapolationshorizonte ($H_j$) durch numerische Approximationen ($T_A''$, $T_B''$) der Zeiträume ersetzt werden, wobei die Approximationen durch Rundung auf genau $10^{-n}$ einer gemeinsamen Zeiteinheit durchgeführt werden, wobei die Approximationen somit ganz und mit einer gegebenen Messskala kommensurabel gestaltet werden können.

**6.** - Verfahren zum Korrigieren von Daten nach einem der Ansprüche 4 oder 5, **dadurch gekennzeichnet, dass** der globale Zeitraum ($T_{AB}$) wie der PPCM der Zeiträume ($T_A$, $T_B$) des erzeugenden Prozesses (A) und des konsumierenden Prozesses (B) oder ihrer ganzen Approximationen ($T_A''$, $T_B''$), ausgedrückt in Ganzzahl einer Messskala, definiert ist.

**7.** - Verfahren zum Korrigieren von Daten nach einem der Ansprüche 2 bis 6, **dadurch gekennzeichnet, dass** die Extrapolationsformel vom Typ beschränkte Entwicklung ist.

**8.** - Verfahren zum Korrigieren von Daten nach Anspruch 7, **dadurch gekennzeichnet, dass** die beschränkte Entwicklung erster Ordnung ist, das heißt $D_{cor} = D_i + H\,(D_i\text{-}D_{i\text{-}i})\,/T_A$.

**9.** - Verfahren zum Korrigieren von Daten nach Anspruch 7, **dadurch gekennzeichnet, dass** die beschränkte Entwicklung zweiter Ordnung ist, das heißt

$$D_{cor}=D_i+(H_j/T_A)\,[3(D_i-D_{i-1})-(D_{i-1}-D_{i-2})]/2+(H_j/T_A)^2\,[(D_i-D_{i-1})-(D_{i-1}-D_{i-2})]/2.$$

**10.** - Automatisiertes System (1), das das Verfahren nach einem der vorangehenden Ansprüche durchführt, wobei das Systems **dadurch gekennzeichnet ist, dass** es aus einer Schießübungsvorrichtung besteht, die zum einen einen Kanonenturm (2) und einen Turmrichtrechner (3) und zum anderen einen Simulationsrechner (4) einer virtuellen Umgebung kombiniert, wobei der Richtrechner (3) den konsumierenden Prozess (B) durchführt, um ein Richten des Turms (2) zu erarbeiten und der Simulationsrechner (4) den erzeugenden Prozess (A) durchführt, um ein virtuelles Bild zu erarbeiten, in dem das von einem Benutzer gesteuerte Richten der Waffe inkorporiert ist, wobei der Richtrechner (3) die vom Simulationsrechner (4) ausgegebenen Datenwerte verwendet, um das Richten des Turms (2) in Abhängigkeit von den vom Simulationsrechner (4) bereitgestellten Ziellokalisierungsinformationen zu steuern.

**Claims**

**1.** - A method of correcting data between a first periodic process, called producer process (A), associated with a first computer (4), and a second periodic process, called consumer process (B), associated with a second computer (3), the processes being incorporated into an automated system (1) with no common clock, the consumer process (B) using at least one datum supplied by the producer process (A) to create at least one status information item of the system (1), and the period ($T_A$) of the producer process (A) being greater than the period ($T_B$) of the consumer process (B), the method being **characterized in that** at least two successive data (D) originating from the producer process (A) are used to create, by extrapolation over at least one extrapolation horizon, a corrected datum ($D_{cor}$) that is used by the consumer process (B) in place of the most recent datum received from the producer process (A).

**2.** - The data correction method according to claim 1, **characterized in that** the corrected datum ($D_{cor}$) used by the consumer process (B) is created by applying an extrapolation formula of order n at least equal to 1, the formula combining the n+1 last data ($D_i$) of the producer process (A) and at least one extrapolation horizon ($H_j$) defined as an average of the time deviations that take place between the production of the data by the producer process (A) and the consumption of said data by the consumer process (B) for the type of data considered and over an overall period ($T_{AB}$).

3.  - The data correction method according to claim 2, **characterized in that** at least two different extrapolation horizons are defined, a first extrapolation horizon ($H_1$) associated with the data received for the first time by the consumer process (B) and a second extrapolation horizon ($H_2$) associated with the data not having been refreshed since the previous period of the consumer process (B).

4.  - The data correction method according to one of claims 2 or 3, **characterized in that** the period ($T_A$) of the producer process (A) and the period ($T_B$) of the consumer process (B) are commensurable or can be made commensurable to a given measurement scale.

5.  - The data correction method according to one of claims 2 or 3, **characterized in that** the period ($T_A$) of the producer process (A) and the period ($T_B$) of the consumer process (B) are not commensurable, but are replaced in the calculation of the corrected data and extrapolation horizons ($H_j$) by numerical approximations ($T_A^n$, $T_B^n$) of said periods, approximations done by rounding to the nearest $10^{-n}$ a common time unit, the approximations thus being able to be made integer and commensurable with a given measurement scale.

6.  - The data correction method according to one of claims 4 or 5, **characterized in that** the overall period ($T_{AB}$) is defined as the smallest common multiple of the periods ($T_A$, $T_B$) of the producer process (A) and of the consumer process (B) or of their integer approximations ($T_A^n$, $T_A^b$), expressed in integer number of a measurement scale.

7.  - The data correction method according to one of claims 2 to 6, **characterized in that** the extrapolation formula is of the limited development type.

8.  - The data correction method according to claim 7, **characterized in that** the limited development is of the 1st order, namely $D_{cor} = D_i + H (D_i - D_{i-1})/T_A$.

9.  - The data correction method according to claim 7, **characterized in that** the limited development is of the 2nd order, namely $D_{cor} = D_i+(H_j/T_A)[3(D_i-D_{i-1})-(D_{i-1}-D_{i-2})]/2+(H_j/T_A)^2[(D_i-D_{i-1})-(D_{i-1}-D_{i-2})] /2$.

10. - An automated system (1) implementing the method according to one of the preceding claims, the system being **characterized in that** it consists of a firing training device associating, on the one hand, a cannon turret (2) and a turret aiming computer (3), and on the other hand, a computer (4) for simulating a virtual environment, the aiming computer (3) implementing the consumer process (B) for creating an aiming of the turret (2) and the simulation computer (4) implementing the producer process (A) for creating a virtual image in which the aiming of the weapon controlled by a user is incorporated, the aiming computer (3) using the data originating from the simulation computer (4) to control the aiming of the turret (2) based on target location information supplied by the simulation computer (4).

[Fig. 1]

[Fig. 2]

[Fig. 3a]

[Fig. 3b]

[Fig. 3c]

[Fig. 3d]

[Fig. 4]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **GERBER R et al.** Guarenteeing real-time requirements with resource-based calibration of periodic processes. *IEEE Transactions on Software Engineering,* 01 Juillet 1995, vol. 21 (7), 579-592